Europäisches Patentamt

**European Patent Office**

**Office européen des brevets**

(19)

(11) Publication number : **0 292 098 B1**

(12) # EUROPEAN PATENT SPECIFICATION

(45) Date of publication of patent specification :
**15.01.92 Bulletin 92/03**

(51) Int. Cl.⁵ : **B62D 33/04, E05C 9/08**

(21) Application number : **88302360.8**

(22) Date of filing : **17.03.88**

(54) Curtainside truck trailer access system and lock assembly.

(30) Priority : **21.05.87 US 53278**

(43) Date of publication of application :
**23.11.88 Bulletin 88/47**

(45) Publication of the grant of the patent :
**15.01.92 Bulletin 92/03**

(84) Designated Contracting States :
**DE FR GB**

(56) References cited :
**EP-A- 0 051 931**
**EP-A- 0 152 195**
**DE-A- 2 847 744**
**GB-A- 2 071 582**

(73) Proprietor : **THE EASTERN COMPANY**
**21944 Drake Road**
**Cleveland Ohio 44136 (US)**

(72) Inventor : **Pastva, John V.**
**10839 Holliston Lane**
**Parma Heights Ohio 44130 (US)**

(74) Representative : **Adams, William Gordon et al**
**RAWORTH, MOSS & COOK 36 Sydenham**
**Road**
**Croydon Surrey CR0 2EF (GB)**

## Description

## Technical Field

The present invention relates to a truck trailer or cargo container access system of the flexible curtain type used to access the interior of a trailer or cargo container along the side for loading or unloading the truck trailer at various locations along the length of the truck trailer.

## Background Art

Trucks, truck trailers and large shipping or cargo containers are generally of the type having a rectangular configuration with two parallel longitudinal side walls and two end walls. One of the end walls typically includes pivoted double doors to facilitate loading and unloading of the truck trailer compartment. While this type of door is capable of facilitating loading operations, the opening it provides is limited in size to the dimensions of the end wall, and thus is inconvenient for loading certain types of cargo.

Special cargo, or special delivery cargo, also require a greater degree of access to the interior than can be provided by pivoted double doors located on the smaller end wall of the truck trailer. Large heavy cargo, for example, may be difficult to load into the truck trailer via the end wall opening. Where delivery of the cargo is required to be made directly to a construction site or other location where the cargo will be used directly, loading equipment and/or personnel may be sufficiently limited as to make the unloading operation quite difficult. Unloading of bulky cargo from an end wall opening can be difficult even where experienced personnel are available at a designated loading dock with proper equipment, such as a warehouse of other storage facility.

In the past, systems which have been used to provide interior container access via the longitudinal side walls instead of the one end wall, have made use of pivoted single and double doors, as well as doors comprising a flexible curtain. Curtain doors or "curtainside" access systems of the past have consisted of longitudinally as well as vertically moving curtains. While curtainside sustems have had the advantage of providing extensive load access to the truck trailer interior, one disadvantage has been inadequate harware to support and guide the curtains and inadequate security techniques for securing the curtains in a closed position. Another problem with these types of curtainside systems is that they often require the curtain to extend the entire length of the truck trailer.

In DE-A-2847744 there is disclosed a locking mechanism for securing a side wall shutter in a goods vehicle. The locking mechanism comprises a shaft having bearing members adjacent opposite ends of the shaft so as to rotatably attach the shaft to the shutter, a latch extending transversely of the shaft arranged to latch onto a post acting as a keeper and an operating means extending transversely of the shaft for rotating the shaft to latch or unlatch the mechanism, and a lock engageable with the operating means to prevent rotation of the shaft. This arrangement whilst being suitable for securing a substantially rigid closure member or shutter is not suitable for securing a flexible curtain. This is because the throw of the latch is inadequate and because the flexibility of a curtain would make alignment between latch and the latch keeper difficult.

The present invention provides a new and improved system for accessing interior portions of a truck trailer, truck or cargo container. The term "truck trailer" as used hereinafter in intended to include trucks and cargo containers.

EP-A-0152195 shows a locking mechanism for securing a curtain in a curtain sided goods trailer in which the curtain rather than being locked by a latch and keeper arrangement is tensioned by a spool driven by an operating means the spool being locked by pin which itself can be locked to prevent rotation of the spool. This arrangment is complicated and requires a deep recess for the spool arrangment which takes up valuable space in the limited volume of the trailer.

A flexible curtain assembly according to the invention has a lock mechanism for securing a curtain in an opening in a truck trailer, comprising a shaft having bearing members adjacent opposite ends of the shaft rotatably to attach the shaft to and for support by either one of the frame members of the truck trailer and curtain ; a latch rotatably connected to and extending transversely of the shaft and arranged to latch onto a keeper securable to the other one of the frame member and curtain so that the curtain can be latched to the frame member or one said curtain be latched to another said curtain ; an operating means extending transversely of the shaft for rotating the shaft in the bearing members and extending in a direction opposite to that of the latch when the latch is engaged with its keeper ; a lock member securable to the support for the shaft and positioned for engagement with the operating means to prevent rotation of the shaft wherein the latch guide is securable to the support for the shaft for engagement with the latch to guide the latch to provide its proper engagement with its associated keeper.

The system suitably includes a flexible panel or curtain which is movably mounted along rails secured to the truck trailer frame adjacent upper and lower longitudinal edge portions of the truck trailer. The curtain forms a wall of the truck trailer and is supported on the truck trailer along upper and lower rails by upper and lower rollers attached to upper and lower longitudinal edges of the curtain. Thus, the curtain can be collapsed or expanded in a horizontal direction to open or close the side of the truck trailer.

Principal features of the system include a novel curtain system whereby a single curtain may be used to cover the truck trailer opening, or, alternatively, multiple curtains may be used which are interconnected by rigid panels extended between the upper and lower edges of the truck trailer.

The system includes improved upper and lower roller assemblies attached to the curtain. The upper roller assembly includes a swivel mechanism and spring support which allows the roller to swivel and permits expansion and contraction of the panel in a vertical direction. The lower roller assembly includes a pair of vertically spaced rollers that engage opposed edges of the lower rail.

A closure mechanism is provided for securing the flexible curtain in the closed position, i.e., expanded condition, and includes a latch mechanism and a keeper, one fixed to the curtain and one fixed to a stationary part of the truck trailer. The latch mechanism includes a vertical rotatable shaft, a latch connected to the shaft, and an operating member connected to the shaft for rotating the shaft to move the latch into engagement with the keeper. In a preferred embodiment, fixed and/or movable support panels are mounted between the longitudinal edges of the truck trailer to support the shaft, and one or more latches are attached to the shaft. One or more keepers may be attached to the curtain, a movable support panel integral with the curtain or to the truck trailer itself. Where the system uses a single flexible curtain, support panels, each having a closure mechanism, may be integral with the curtain, or fixed or movably mounted one at each end of the longitudinal truck trailer wall, and the curtain may thus be secured in the closed position to a support panel or the truck trailer frame. Where multiple curtains are used, support panels having closure mechanisms may be positioned along the truck trailer intermediate the ends of the truck trailer. A latch guide for each latch is attached to the support panel and is captively engaged by the latch to control the path of engagement between the latch and keeper. A spring biased lock or trigger thumb lock mechanism secures the closure mechanism in a closed position by preventing shaft rotation. The latch construction of the closure mechanism is constructed to apply tension to the curtain in a horizontal direction during latching.

The closure mechanism is preferably manufactured to be reversible for operation in either a right or left hand fashion. The mechanism preferably includes two identical latches, each being rotatably connected to the shaft adjacent opposite ends of the shaft by a bracket. Each latch additionally includes an elongated guide aperture for engagement with the latch guide. The keepers are preferably configured to support a vertically extending handle between the keepers.

During a normal curtain closing procedure, the curtain is moved from a contracted position, which allows access to the truck trailer interior, to an expanded curtain position in which the curtain closes the side wall opening. The curtain is moved between positions by an operator grasping the handle mounted on the curtain and pulling the curtain to a substantially closed position. The latches are in an extended position in which they hook onto their associated keepers. The shaft of the latch mechanism is then rotated to tension the curtain and secure the latches to their keepers. To rotate the shaft the operator moves the operating member from a position at right angles with the support panel to a position which is parallel with the support panel. This pulls the latches to a retracted position. The captive engagement of the guide members through the guide apertures in the latches controls the path of travel of the latches such that they are urged into proper engagement with the associated keepers. When the operating member is moved to a position parallel with the panel and the latches and keepers are engaged, it engages the trigger thumb lock member, which maintains the position of the operating member. A cable seal or padlock shackle may then be engaged with the trigger thumb lock to prevent release and movement of the shaft.

In order to access the truck trailer the trigger thumb lock must first be unlocked by removing the padlock and applying pressure to the trigger thumb lock against the bias of the spring. When sufficient pressure is applied the trigger thumb lock releases the operating member from engagement with the trigger thumb lock. The curtain may then be opened by rotating the shaft to extend the latches. During extension, the latches are guided to disengage from the keepers.

These and other features and advantages of the invention will be better understood from the following description of the invention shown in the accompanying drawings.

Brief Description of the Drawings

Figure 1 is a perspective view of a truck trailer showing one embodiment of the truck trailer access system of the present invention ;
Figure 2 is a front view of the swivel mechanism used on the upper longitudinal edge of the curtain ;
Figure 3 is a partial sectional view taken along the line 3-3 in Figure 1 ;
Figure 4 is a front view of the roller used on the lower longitudinal edge of the curtain ;
Figure 5 is a sectional view taken along the line 5-5 in Figure 1 ;
Figure 6 is a front elevation showing the closure mechanism of the present invention with portions broken away ;
Figure 7 is a sectional view taken along the 1 line 7-7 of Figure 6 ;
Figure 8 is a sectional view taken along the line 8-8 of Figure 6 ;

Figure 9 is a front elevation showing the trigger thumb lock of the present invention ;

Figure 10 is a side elevation of the preferred construction of the keeper of the present invention ;

Figure 12 is a front elevation of the latch guide of the present invention ;

Figure 13 is a view taken along the line 13-13 of Figure 6 and shows the latch assembly of the present invention in a latched position ;

Figure 14 is a view similar to that of Figure 13 with the latch assembly in a position intermediate the latched and unlatched positions ; and

Figure 15 is a view similar to that of Figure 13 with the latch assembly shown in the unlatched position.

## Best Mode for Carrying Out The Invention

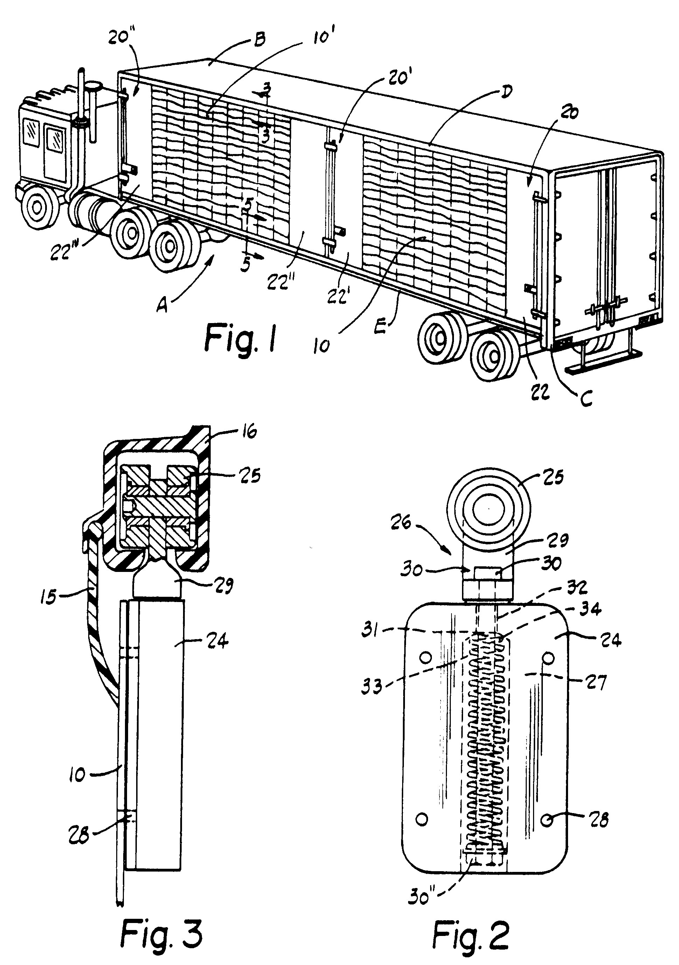

A preferred embodiment of the truck trailer access system of the present invention is illustrated on a truck trailer in Figure 1. The access system is shown with multiple flexible panels or curtains 10, 10′ covering an opening in a longitudinal side A of the trailer or container B. The curtains 10, 10′ are supported on a truck trailer frame C of the trailer B by upper and lower rollers 12, 14 engaged along upper and lower elongate rails 16, 18 secured to upper and lower longitudinal edges D, E of the truck trailer side A.

The system preferably includes latching mechanisms generally designated by reference numerals 20, 20′, 20″. As shown in Figure 1 the multiple curtain embodiment of the system includes an intermediate latching mechanism 20′ secured to support panels referenced by numerals 22′ and 22″, which are attached to flexible curtains referenced at 10 and 10′. The support panels are preferably adapted for independent fixed or movable engagement on the truck trailer frame or for interconnection to a vertical edge of the curtain. The latching mechanism of the system is of the type which is reversible for operation at either end of the truck trailer side, in either a right or left handed operating fashion.

As illustrated, one curtain 10 is interconnected with a first support panel 22 having a left hand latching mechanism 20 secured in part to the panel and in part to the truck trailer. The curtain is also interconnected with a second support panel 22′ having a right hand latching mechanism 20′. Latching mechanisms secured in part to movable panels may thus be engaged with those portions of the mechanism secured to fixed support panels.

The curtain 10′, as a further example, is interconnected with a fixed support panel 22″ at one end and with a movable panel 22‴ at an opposite end. The movable panel 22‴ in part supports a right hand latching mechanism 20″ which is also partially engaged with the truck trailer frame. The system could further be arranged with additional fixed support panels whereby the latching mechanism 20, 20″ would be supported in part on a movable panel 22, 22‴ and in part on additional fixed panels, instead of the truck trailer frame as illustrated in Figure 1. Since the system is adapted to allow any combination of curtains, support panels, and right or left hand latching mechanisms, and the elements of the system are quite similar except as to reverse/right-left hand construction, only the curtain 10, latching mechanism 20 and support panel 22 will be described in detail.

The curtain may be manufactured from any suitable material such as vinyl, canvas and other flexible water repellant materials. As shown, the curtain may include vertical and/or horizontal stays where there is no support panel interconnected along the curtain edges, stiffening end ribs, not illustrated, may also be used to support elements of the latching mechanism. The support panels are preferably of ply-metal or other suitable steel fabrication material.

The curtain 10, shown in the embodiment of Figure 1 is movably mounted on the truck trailer B by upper and lower rollers 12, 14 engaged along the upper and lower rails 16, 18. As shown in Figures 2 and 3, the upper roller 12 comprises a swivel mechanism which housing 24, a rotatable roller 25, structure for securing the roller to the housing 26 and a spring assembly 27. The swivel mechanism is secured to the curtain 10 by conventional members through apertures 28 in the housing 24. The roller 25 is rotatable about a central axis which is generally at right angles with the housing and curtain 10. The roller 25 is connected with the housing and spring assembly by an interconnecting member 29 rotatable about the central axis of the roller, and an elongate fastener 30. The fastener is attached at one end 30′ to the interconnecting member 29 and has a body portion 31 which extends into a containment portion 33 of the housing 24 through an access aperture 32. The body portion 31 extends through and along the length of a compression spring 34 within the containment portion. A second end 30″ of the fastener spaced from the first secures the spring 34 within the containment portion 33.

Figure 3 illustrates the roller 25 engaged within the rail 16 which is secured to the upper longitudinal edge D of the truck trailer frame and is preferably an extruded metal track. A gasket 15 engagable with the rail is provided to prevent moisture from entering the truck trailer past an upper edge of the curtain 10.

During movement of the panel 10, the spring assembly of the swivel mechanism 12 enables the roller 25 to swivel with respect to the upper rail 16, and also permits relative expansion and contraction of the housing 24 and curtain 10 in the vertical direction.

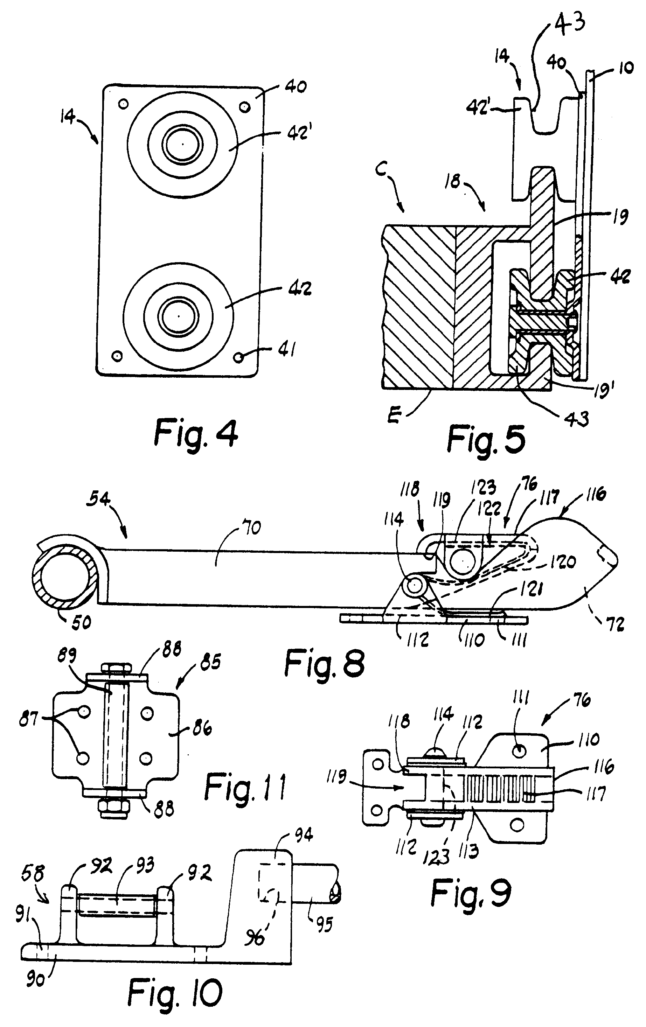

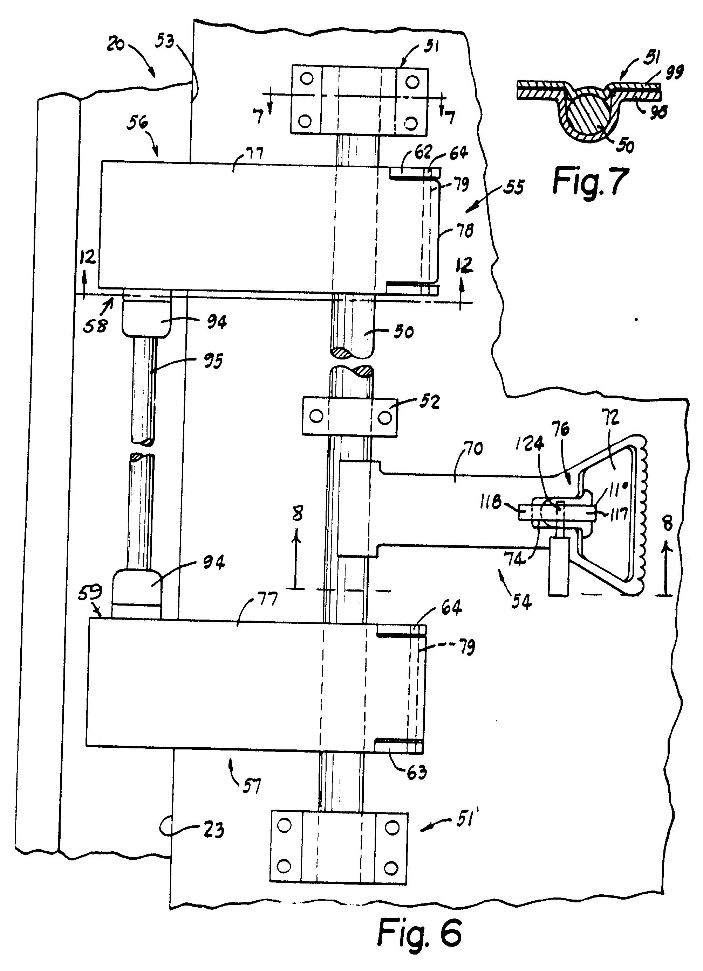

As illustrated in Figures 4 and 5, the lower roller 14 is secured to the curtain 10 for engagement with those lower rail 18, attached to the lower longitudinal edge E of the frame C. The roller 14 includes a plate 40 having apertures 41 through which the plate is secured to the curtain 10 by conventional fasteners. Each roller member 42, 42' is rotatably attached to the plate 40 about a central axis extending at right angles from the plate, and includes a peripheral groove 43 for receiving rail flanges. As shown in Figure 5, the lower rail 18 includes an upper flange 19 which has a T-shaped cross-sectional configuration receivable within the peripheral groove 43 of both of the rollers 42, 42'. A lower flange 19' of the rail 18 has an L-shaped cross-sectional configuration engaging only one of the rollers 42. The rail 18 is shown in Figure 5 supported on the lower longitudinal edge of the truck trailer frame C. The rollers 25, 42, 42', used on both the upper and lower rollers 12, 14 are of the conventional variety rotatable about a central axel using bearing members.

With reference to Figure 6, the latching mechanism 20 is illustrated as including a shaft 50 connected to a rigid panel, an operating member 54 for rotating the shaft, a latch assembly 55 and associated keepers 58, 59, the latch assembly and keepers alternately secured to the support panel or to the truck trailer frame, and a trigger thumb lock 76. As shown in the multiple curtain embodiment of Figure 1 the latching mechanism is constructed to apply tension to the curtain 10 in a horizontal direction as it secures the curtain in a position closing one part of the truck trailer opening.

The shaft 50 of the latching mechanism is rotatably supported against axial movement by a plurality of upper and lower bearing members 51, 51' secured to the support panel. The bearing members 51, 51' preferably include a shaft engagement member 98 and a mounting member 99. As shown in Figure 7, the bearing members are structured to rotatably secure the shaft 50 between the shaft engagement member 98 and mounting member 99, with the mounting member 99 secured to the support panel 22 between the shaft 50 and the support panel. An intermediate bearing member 52 may also be provided intermediate the two ends of the shaft. The shaft 50 may be rotated about a vertical axis spaced from and parallel with an adjacent longitudinal edge 23 of the support panel 22, using the operating member 54 attached to the shaft at a location convenient to facilitate its rotation by an operator.

As shown in Figures 6 and 8, the operating member 54 for rotating the shaft 50 includes a strap-like handle portion 70 which is welded to the shaft 50 at one end of the handle portion. The opposite end of the handle portion 70 includes a hand aperture 72 through which the operator's fingers may be extended to hand grasp the operating member. A lock aperture 74 extends from the hand aperture 72 in a direction toward the shaft 50 for engagement with the spring biased trigger thumb lock 76. The trigger thumb lock 76 illustrated in Figures 8 and 9 includes a plate 110 having apertures 111 through which the member is attached to the support panel at a location for engagement with the operating member 54 by conventional fasteners. The leg portions 112 extend from the plate in a direction away from the panel. A body portion 113 is pivotally secured about a pivot pin 114 which extends between the leg portions 112, and includes a first end 116 away from the shaft with a finger pressure surface 117, and a second end 118 intermediate the first end 116 and the shaft 50 with an engagement groove 119. A leaf spring 120 is positioned about the pivot pin 114 and engages the plate 110 at a first end 121 and the body portion at a second end 122 as shown in Figure 8. An aperture 123 extends through the body portion 113, through which a padlock shackle 124 may be extended as shown in Figure 8. The aperture has a central axis spaced from and parallel with the central axis of the pivot pin 114.

The latch assembly 55 includes one or more latches for engagement with keepers 58, 59. As shown in Figure 6, the assembly includes upper and lower latches 56, 57, brackets 62, 63 and associated latch guides 85.

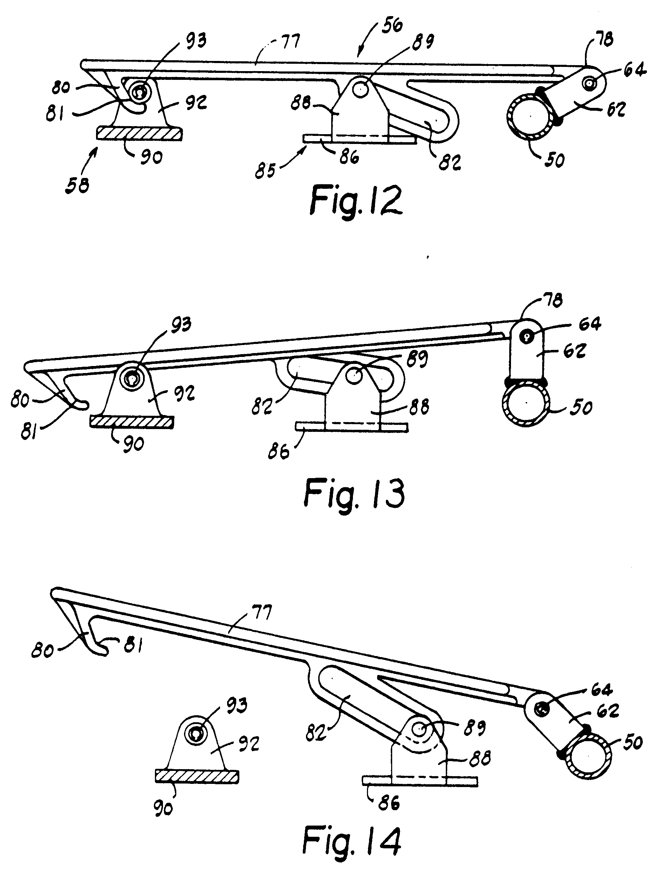

The upper and lower latches 56, 57 are rotatably interconnected with upper and lower U-shaped brackets 62, 63 which, as shown in Figure 13, are welded to the shaft 50. As shown in Figure 6, the latches 56, 57 extend transversely from the brackets 62, 63 and are pivotally secured to the brackets about pins 64, the axes of which are substantially parallel with but offset from the access of the shaft 50. The latches 56, 57 are rotatably operated via the brackets upon rotation of the shaft 50, to cooperate with associated upper and lower keepers 58, 59 which are secured to the curtain or structure integral therewith near an adjacent edge 53 for proper alignment and engagement with the latches 56, 57.

The latches 56, 57 are identical in construction and preferably include a rectangularly shaped strap like body portion 77, one end of which overlies the shaft 50 and includes a boss portion 78 having an elongate cylindrical passage 79 for engagement by the pin 64. An elongate guiding aperture 82 is positioned on a side of the body portion 77 facing the support panel. The opposite end of the latch has a latch retaining portion 80 which is inturned or projects inwardly toward the shaft 50 for engagement with the associated keeper along a cam surface 81 as shown in Figure 13. During engagement of the latch and keeper, the retaining portion 80 hooks over and the cam surface 81 engages the keeper.

The latch guide 85, illustrated in Figure 12, is secured to the support panel at a location for captive engagement with the latch guiding aperture 82. Pivotal movement of the latch upon rotation of the shaft 50 is thus limited by the captive engagement of the latch guide 85 with the guiding aperture 82. The latch guide 85 includes a plate 86 which is secured to the support panel through apertures 87. Leg portions 88 extend from the plate in a direction away from the support panel. A grab member 87 is secured to and positioned between the leg portions and has a central axis which is substantially parallel with but offset from the axis of the shaft 50. The grab member 87 captive within the guiding aperture 82 of the latch, control the rotating movement of the latch as it moves between latched and unlatched positions, and guide the latch to provide proper engagement with the associated keeper.

As shown in Figure 10, keepers 58, 59 include a plate 90 attached to structure located adjacent the curtain edge 53 through apertures 91. Leg portions 92 extend from the plate in a direction away from the curtain structure. A grab member 93 extends between the leg portions for engagement with the latch retaining portion 80 and has an axis which is substantially parallel with but offset from the axis of the shaft 50. The keepers illustrated in Figures 6 and 10 preferably include a handle mount 94 extending outwardly from the plate 90 and having an aperture 96 for engaging a handle 95.

The handle 95 comprises a shaft-like member having a central axis spaced from and parallel with the axis of the shaft 50, which extends between the handle mounts 94 engaged in the handle apertures 96 of the upper and lower keepers.

When the curtain 10 is in an open position such that the longitudinal side A of the truck trailer is open for loading and unloading cargo, the curtain is in a contracted or accordian-like position at one end of the opening, or the curtain may be disengaged from the rails.

To move the curtain to an expanded or closed position, the contracted curtain is moved along the rails 16, 18 on a plurality of rollers 12, 14 to a position covering the longitudinal opening of the truck trailer. The curtain is moved along the rails by an operator grasping the handle 95, the shaft 50 of the latching mechansim or any other convenient portion of the curtain, until the edge 53 of the curtain is adjacent the longitudinal edge 23 of the support panel 22 and the truck trailer opening is closed. Once the curtain is in the closed position, the shaft 50 may be rotated using the operating member 54 to engage the upper and lower keepers 58, 59 with the upper and lower latches 56, 57. To move the operating member 54 the operator grasps the handle portion 70 through the hand aperture 72 and rotates the member 54 from a position in which the member is at right angles with the support panel to a position in which the member is parallel with the support panel and the latches 56, 57 are rotated to a retracted position as shown in Figure 13. Movement of the operating member between the right angle and parallel positions rotates the shaft 50, bracket 63 and latches 56, 57 from the open, unlatched position shown in Figure 15, through the intermediate position shown in Figure 14, to the closed, latched position of Figure 13. The association and engagement of the guiding aperture 82 of the latches and the grab member 87 of the latch guides 85 control the path of travel of the latches so that the latch retaining portion 80 of each is forced to catch the grab member 91 of the keepers along cam surface 81. When the operating member is parallel with the panel and the latches and keepers are engaged, the operating member 54 may be engaged with the trigger thumb lock 76 as in Figure 8.

To lock the operating member 54 and thereby prevent rotation of the shaft and disengagement of the latches and keepers, the lock aperture 74 of the operating member 54 is engaged with the trigger thumb lock. To engage the members, pressure is applied to the operating member against the trigger thumb lock to overcome the leaf spring biasing the body portion away from the support panel, and move the handle portion 70 past the body portion 113 into association with the engagement groove 119 as shown in Figures 6 and 8. Alternatively, pressure may be applied to the first end 116 of the body portion forcing it toward the support panel such that the handle portion 70 may be moved past the body portion and into association with the engagement groove. Once the lock and operating members 76, 54 are engaged, a padlock shackle, cable seal 24 or the like may be engaged through aperture 123 as in Figure 6 to prevent rotation of the shaft by means of the operating member.

To gain access to the truck trailer interior when the system of the present invention is in the locked position, the padlock shackle is removed from the trigger thumb lock, and pressure is applied to the finger surface 117 of the body portion 113 against the force of the leaf spring 120 to release the operating member from the lock engagement groove 119. The operating member may then be rotated to the right angle position oscillating the shaft to extend the latches and disengage them from the keepers. The curtain may then be moved along the rails to the desired position.

## Claims

1. A flexible curtain assembly having a lock mechanism (20) for securing a curtain (10, 10') in an opening in a truck trailer, comprising a shaft (50) having bearing members (51, 51') adjacent opposite ends of the shaft rotatably to attach the shaft to and for support by either one of the frame members (c) of the truck trailer and curtain (10, 10'); a latch (56, 57) rotatably connected to and extending transversely of the shaft and arranged to latch onto a keeper (58, 59) securable to the other one of the frame member and curtain so that the curtain can be latched to the frame member or one said curtain be latched to another said curtain ; an operating means (54) extending transversely of the shaft for rotating the shaft in the bearing members and extending in a direction opposite to that of the latch when the latch is engaged with its keeper; a lock member (76) securable to the support for the shaft and positioned for engagement with the operating means to prevent rotation of the shaft wherein the latch guide (85) is securable to the support for the shaft for engagement with the latch to guide the latch to provide its proper engagement with its associated keeper.

2. The flexible curtain assembly of Claim 1 wherein the operating means comprises a handle member (70) adapted for operation in a direction away from the support, including a hand-receiving aperture (72) defined in part by an adjacent hand-grip portion, and a lock-receiving aperture (74) extending from the hand-receiving aperture in a direction toward the shaft for receiving the lock member (76).

3. The flexible curtain assembly of Claim 1 or 2 wherein the latch includes a bracket (62, 63) on the shaft to which the latch is rotatably connected, and the latch guide comprises latch-guiding structure (82, 86, 88, 89) that captively engages the latch guide, and a latching portion (80) for engagement with the keeper.

4. The flexible curtain assembly of Claim 3 wherein each latch guide and keeper includes a plate (86, 90) with leg portions (88, 92) extending in a direction away from the plate, a grab member (89, 93) secured to and positioned between the leg portions having a central axis parallel to the vertical axis of the shaft, said keeper and latch guide grab members spaced from one another for engagement with the latching portion and latch guiding structure, respectively.

5. A flexible curtain assembly according to any one of the preceding claims wherein the lock member includes a plate (110) with leg portions (112) extending in a direction away from the plate, a body portion (113) movably secured about a pin (114) extending between the leg portions and having an engagement groove (119) for engaging the operating means and an aperture (123) parallel with said axis to engage a padlock shackle, cable seal or the like to prevent movement of the body portion, and a leaf spring biasing the body portion against the operating means to maintain the operating means engaged with the lock member.

6. A flexible curtain assembly according to any one of the preceding claims including a means (12, 14) for supporting a flexible curtain between upper and lower edges of a truck trailer (B) comprising ; stationary mounting members comprising upper and lower elongate rails (16, 18) securable to a truck trailer frame adjacent upper and lower longitudinal edge portions thereof, and members (12, 14) attachable to the curtain and movably engaged with and retained in said mounting members.

7. The flexible curtain assembly of Claim 6 wherein the members movably engaged with said mounting members comprise upper and lower roller assemblies securable to a curtain engaged with the upper and lower rails For supporting a curtain during expanding and contracting movement along the rails.

8. A flexible curtain assembly according to any one of Claims 1 to 5, including a plurality of roller mechanisms and rail combination for supporting a flexible curtain between upper and lower edges of a truck trailer, said roller mechanisms each having a plate (40) for attachment to a curtain and two roller members (42, 42') attached to the plate, each rotating about a central axis extending from the plate at right angles, spaced to receive a first rail between them, said first rail attached to a truck trailer frame and including a T-shaped flange receivable between the rollers, and an L-shaped flange spaced from the T-shaped flange and engaged with one of the rollers.

9. A flexible curtain assembly according to any of one Claims 1 to 5, including a plurality of roller mechanisms and rail combination for supporting a flexible curtain between upper and lower edges of a truck trailer, said roller mechanisms securable edges of a truck trailer, said having a spring assembly (31, 34) carried by a plate, a roller having a central axle at right angles to the plate, and an interconnecting member (29) rotatably supporting the central axle and secured to an elongate body (31) attached to the spring assembly for relative swivel movement and longitudinal movement relative to the plate and said rail member securable to an edge portion (D) of a truck trailer adjacent an opening in a longitudinal side wall and adapted for roller engagement along the rail within an elongate roller retaining portion having a slot for receiving the interconnecting member.

**Patentansprüche**

1. Verformbare Falttürenanordnung mit einem Verriegelungsmechanismus (20) für eine balgförmige Falttüre (10, 10') zum Verschluß der Ladeöffnungen von Lastkraftwagen, bestehend aus einer Gelenkstange (50), welche im Bereich ihrer Enden in entsprechenden Widerlagern (51, 51') drehbar gelagert ist und welche auf diese Weise entweder mit einem Rahmenelement (c) des Lastkraftwagens oder einer balgförmigen Falttüre (10, 10') verbunden ist, fernerhin einem senkrecht an der Gelenkstange angelenkten verschwenkbaren Verriegelungselement (56, 57), welches in ein entsprechendes Halteglied (58, 59) zum Einhängen gelangt, das an einem anderen Rahmenelement bzw. einer balgförmigen Falttüre befestigt ist, so daß die jeweilige Falttüre gegenüber dem Rahmenelement oder einer anderen Falttüre verriegelbar ist, fernerhin einem senkrecht an der Gelenkstange befestigten, der Verschwenkung derselben dienenden Betätigungselement, welches im eingerasteten Zustand des Verriegelungselements in dem Haleglied sich in der entgegengesetzten Richtung zu dem Betätigungselement erstreckt, sowie einem an dem Träger der Gelenkstange befestigten Schloßelement (76), welches mit dem Betätigungselement in Eingriff gelangt, um eine Verschwenkung der Gelenkstange zu verhindern, wobei an dem Träger der Gelenkstange zusätzlich ein Führungselement (85) vorgesehen ist, welches mit dem Verriegelungselement in Eingriff gelangt, um dasselbe in den gewünschten Eingriff mit dem Halteglied zu bringen.

2. Falttürenanordnung nach Anspruch 1, dadurch gekennzeichnet, daß das Betätigungselement einen Handgriff (70) aufweist, welcher in eine von dem Träger wegführende Richtung betätigbar ist, wobei dieser Handgriff eine der Aufnahme der Hand dienende Öffnung (72) besitzt, die zum Teil durch den von einer Hand zu ergreifenden Teil begrenzt ist und wobei zusätzlich eine Schloßöffnung (74) vorgesehen ist, welche sich von der der Aufnahme der Hand dienenden Öffnung in Richtung der Gelenkstange zur Aufnahme des Schloßelementes (76) erstreckt.

3. Falttürenanordnung nach Anspruch 1 oder 2, dadurch gekennzeichnet, daß im Bereich der Gelenkstange ein Backen (62, 63) vorgesehen ist, gegenüber welchem das Verriegelungselement schwenkbar gelagert ist, daß im Bereich des Führungselementes eine Führung (82, 86, 88, 89) vorgesehen ist, welche mit dem Führungselement in Eingriff gelangt, und daß das Verriegelungselement schließlich noch mit einem Hakenansatz (80) versehen ist, welcher mit dem Halteglied in Eingriff gelangt.

4. Falttürenanordnung nach Anspruch 3, dadurch gekennzeichnet, daß sowohl das Führungselement als auch das Halteglied jeweils mit einer Platte (86, 90) versehen sind, von welchem sich jeweils zwei Ansätze (88, 92) erstrecken, und daß zwischen diesen Ansätzen jeweils ein Stift (89, 93) angeordnet ist, dessen Achse parallel zu der Achse der Gelenkstange verläuft, wobei das Halteglied und das Führungselement in einem gewissen Abstand voneinander angeordnet sind, um sowohl mit dem Verriegelungselement und dem Führungselement in Eingriff zu gelangen.

5. Falttürenanordnung nach einem der vorhergehenden Ansprüche, dadurch gekennzeichnet, daß das Schloßelement (76) eine Platte (110) mit entsprechenden Ansätzen (112) aufweist, welche sich von der Platte wegerstrecken, ferner einem Hauptteil (113), welcher an einem zwischen den Ansätzen befestigten Stift (114) schwenkbar gelagert ist und welcher eine Eingriffsrinne (119) aufweist, die mit dem Betätigungselement in Eingriff gelangt sowie einer parallel zu der Achse verlaufenden Öffnung (123), durch welche der Bügel eines Vorhängeschlosses, ein Seilverschluß oder dgl. hindurchführbar sind, wobei zusätzlich eine Blattfeder vorgesehen ist, mit welcher der Hauptteil gegen das Betätigungselement bewegbar ist, um das Betätigungselement mit dem Schloßelement in Eingriff zu halten.

6. Falttürenanordnung nach einem der vorhergehenden Ansprüche, dadurch gekennzeichnet, daß die die Falttüren zwischen den oberen und unteren Kanten der Ladeöffnung von Lastkraftwagen (B) haltenden Einrichtungen (12, 14) stationäre Befestigungselemente für obere und untere Längsschienen (16, 18) aufweisen, welche an dem Rahmen des Lastkraftwagens in der Nähre der oberen und der unteren Längskante befestigt sind, und daß an den Falttüren Elemente (12, 14) befestigt sind, welche mit den stationären Befestigungselementen in Eingriff stehen und von denselben geführt werden.

7. Falttürenanordnung nach Anspruch 6, dadurch gekennzeichnet, daß die an den Falttüren befestigten Elemente obere und untere Rollenanordnungen sind, welche bei der Öffnung oder der Schließung der betreffenden Falttüre entlang der oberen und unteren Schienen entlanggeführt sind.

8. Falttürenanordnung nach einem der Ansprüche 1 bis 5, dadurch gekennzeichnet, daß zur Halterung einer balgförmigen Falttüre zwischen den oberen und unteren Kanten der Ladeöffnung eines Lastkraftwagens eine Mehrzahl von Rollenmechanismen und Schienenelementen vorgesehen sind, wobei diese Rollenmechanismen jeweils eine an der Falttüre befestigte Platte (40) sowie zwei an der Platte befestigte Rollenelemente (42, 42') aufweisen, welche um eine senkrecht von der Platte wegführende Achse drehbar gelagert sind und welche in einem derartigen Abstand angeordnet sind, daß zwischen denselben eine Aufnahme der Schiene erfolgt, welche an dem Rahmen des Lastkraftwagens befestigt ist und welche einen T-förmigen Flansch besitzt, der zwischen den beiden Rollen zu liegen gelangt, während zusätzlich in einem gewissen Abstand von dem T-förmigen Flansch ein L-förmiger Flansch vorhanden ist, welcher mit nur einer dieser Rollen in Eingriff steht.

9. Falttürenanordnung nach einem der Ansprüche 1 bis 5, dadurch gekennzeichnet, daß zur Halterung einer balgförmigen Falttüre zwischen den oberen und unteren Kanten der Ladeöffnung eines Lastkraftwagens eine Mehrzahl von Rollenmechanismen und Schienenelementen vorgesehen sind, wobei diese Rollenmechanismen an einer Kante der Falttüre befestigt sind und eine von einer Platte gehaltene Federanordnung (31, 34) aufweisen, während gleichzeitig eine Rolle vorhanden ist, deren Mittelachse senkrecht zu der Platte steht, und wobei ein Verbindungselement (29) vorhanden ist, welches schwenkbar die Mittelachse trägt und an einem länglichen Körper (31) befestigt ist, der an der Federanordnung wiederum angesetzt ist. um eine relative Schwenkbewegung und Längsbewegung in Bezug auf die Platte zu gestatten, und wobei das Schienenelement, welches am Kantenbereich (D) des Lastkraftwagens im Bereich einer Ladeöffnung der Seitenwandung befestigt ist, in Rolleneingriff entlang der Schiene mit einem länglichen Rollenhalteteil steht, welcher einen Schlitz für die Aufnahme des Verbindungselements besitzt.

**Revendications**

1. Rideau flexible ayant un mécanisme de verrouillage (20) afin d'immobiliser un rideau (10, 10') sur l'ouverture d'une remorque de camion, comprenant un arbre (50) ayant des charnières (51, 51') placées en vis à vis sur chacune de ses extrémités, ces charnières assurent la rotation de l'arbre et coopèrent à la liaison entre le rideau et la structure de la remorque du camion, un loquet (56, 57) libre en rotation et disposé transversalement à l'arbre, un point d'ancrage (58, 59) fixé sur les rideaux ou sur la structure en regard du loquet de façon qu'un rideau puisse être attaché à la structure de la remorque ou à un autre rideau, des dispositifs (54) placés transversalement sur l'arbre permettent la rotation de l'arbre dans ses charnières dans une direction opposée à celle du loquet lorsque ledit loquet est solidarisé sur son point d'ancrage, un dispositif de verrouillage (76) fixé sur le support pour l'arbre, et positionné de façon à s'engager avec les moyens de réalisation afin d'empêcher la rotation de l'arbre dans lequel le guide loquet (85) est immobilisé sur le support pour le verrouillage du loquet de manière à guider le loquet et assurer son propre engagement avec les moyens de verrouillage qui lui sont associés.

2. Ensemble de rideaux flexibles selon la revendication 1 dans lequel les moyens d'opération comprennent une poignée (70) tournée dans une direction extérieure au support, incluant une ouverture (72) avec une partie agrippante et un taquet d'accrochage (74) qui se prolonge dans la direction de la poignée vers le crochet (76) placé sur l'arbre.

3. Ensemble de rideaux flexibles selon l'une des revendications 1 ou 2 dans lequel le loquet comprend un support (62, 63) placé sur l'arbre permettant au loquet de tourner, le guide du loquet comprend une patte (82, 86, 88, 89) qui maintient le loquet et une portion en forme de crochet (80) qui s'engage sur le point d'ancrage.

4. Ensemble de rideaux flexibles selon la revendication 3 dans lequel chaque guide loquet et crochet comprend deux plaques (86 et 90) munies chacune d'une patte (88, 92) dans une direction perpendiculaire à ces dernières, des arbres (89, 93) immobilisés et positionnés sur lesdites pattes, les axes de ces arbres étant parallèles à l'axe de l'arbre du rideau flexible, ledit point d'ancrage et la patte support de loquet sont espacés l'un de l'autre pour permettre respectivement l'engagement de la partie crochetée et le guidage de la structure du guide support.

5. Ensemble de rideaux flexibles selon l'une quelconque des revendications précédentes dans lequel la partie servant au verrouillage comprend une plaque (110) munie d'une équerre (112), un châssis (113) immobilisé par un axe (114) placé sur l'équerre et ayant des rainures (119) pour permettre l'engagement des moyens de verrouillage et une ouverture (123) parallèle à l'axe pour le passage d'un cadenas, d'un câble ou de quelque chose de similaire afin de prévenir le mouvement de ce châssis, un ressort à lame placé en biais dans le châssis qui assure le contact et le maintien entre les dispositifs de verrouillage.

6. Ensemble de rideaux flexibles selon l'une quelconque des revendications précédentes incluant un moyen (12 et 14) qui supporte le rideau flexible entre les bords supérieurs et inférieurs de la remorque (B) comprenant des parties fixes en forme de rails allongés longitudinalement immobilisées en haut et bas sur la caisse du semi remorque et des dispositifs (12, 14) attachés au rideau qui sont engagés et guidés par les rails.

7. Ensemble de rideaux flexibles selon la revendication 6 dans lequel les dispositifs qui sont guidés sur lesdits rails comprennent haut et bas une structure munie de galets fixée sur le rideau et qui permet au rideau flexible de coulisser aisément à l'ouverture et à la fermeture.

8. Ensemble de rideaux flexibles selon l'une quelconque des revendications 1 à 5 dans lequel il comprend une pluralité de dispositifs munie de galets et de rails servant au support et guidage du rideau flexible dans les parties supérieures et inférieures de la remorque du camion, ledit mécanisme comprend une plaque (40) qui sert au point d'attache au rideau, de galets fixés sur cette dite plaque, chaque galet étant muni d'un axe central perpendiculaire à la plaque, ils sont espacés afin de recevoir un premier rail entre eux, ledit rail est fixé à la structure de la remorque du camion et possède dans la partie supérieure, une forme de T munie de rebords entre les galets, et une forme de L espacée de la forme en T qui s'engage sur l'un des galets.

9. Ensemble de rideaux flexibles selon l'une quelconque des revendications 1 à 5 incluant une pluralité de combinaisons de mécanismes galets et rails pour supporter le rideau flexible entre les bords supérieurs et inférieurs de la remorque du camion, ledit mécanisme immobilisé sur l'une des extrémités du rideau possède un ressort (31, 34) disposé sur la plaque de fixation du rideau, un galet ayant un axe central à angle droit de ladite plaque et une partie servant à la connexion (29) entre la plaque de fixation du rideau et le galet, il comprend un axe allongé (31) dans sa partie centrale et attaché au ressort pour contrecarrer les mouvements de rotation et longitudinaux de la tôle, ledit rail fixé sur une portion (D) de la remorque possède un évidement sur le bord longitudinal et s'adapte au passage des galets le long du rail à l'intérieur duquel une partie du rail retenant le galet comprend une fente pour recevoir le mécanisme de connection.

Fig. 1

Fig. 3

Fig. 2

Fig. 4

Fig. 5

Fig. 8

Fig. 11

Fig. 9

Fig. 10

Fig.7

Fig. 6

Fig.12

Fig.13

Fig.14

14